**Europäisches Patentamt**

**European Patent Office**

**Office européen des brevets**

(19)

(11) Veröffentlichungsnummer : **0 016 390**
**B1**

(12) **EUROPÄISCHE PATENTSCHRIFT**

(45) Veröffentlichungstag der Patentschrift :
05.10.83

(51) Int. Cl.³ : **B 62 D 57/02**

(21) Anmeldenummer : **80101194.1**

(22) Anmeldetag : **10.03.80**

(54) **Schreitwerk.**

(30) Priorität : **13.03.79 ZA 791179**

(43) Veröffentlichungstag der Anmeldung :
**01.10.80 Patentblatt 80/20**

(45) Bekanntmachung des Hinweises auf die Patenterteilung : **05.10.83 Patentblatt 83/40**

(84) Benannte Vertragsstaaten :
**AT BE CH DE FR GB IT LU NL SE**

(56) Entgegenhaltungen :
**DE A 1 927 347**
**DE B 2 216 669**
**DE U 66 012 57**
**GB A 1 277 307**
**GB A 2 017 605**
**US A 3 375 892**
**US A 3 446 301**

(73) Patentinhaber : **Edward L. Bateman Limited**
**Bartlett Road**
**Boksburg North Transvaal (ZA)**

(72) Erfinder : **Rabinovitch, Yosef Kivvovich**
**302 Berea Gardens Cr. Barnato and**
**Beatrice Street Berea Johannesburg (ZA)**

(74) Vertreter : **Schönwald, Karl, Dr.-Ing. et al**
**Deichmannhaus**
**D-5000 Köln 1 (DE)**

## Schreitwerk

Die Erfindung bezieht sich auf ein Schreitwerk, dessen eine Last aufnehmende Plattform sich über ein Untergestell auf dem Untergrund abstützt, wobei zwischen der Plattform und dem Untergrund als schwenkbare, kraftbetätigte, anhebbare und absenkbare Vorrichtung mit einem angelenkten Fuß ein einziges, in Höhenrichtung verstellbares kraftbetätigtes Huborgan vorgesehen ist, das zur Vertikallinie des Lastschwerpunktes versetzt angeordnet ist.

Schreitwerke für schwerere Last sind in verschiedenen Ausführungen bekannt. Bei der einen Art werden mehrere senkrecht verstellbare Hubelemente verwendet. Die DE-A 1 927 347 beschreibt ein Schreitwerk für ein schweres Gerät, bei dem zwei Tragwerke vorhanden sind. Das eine Tragwerk stellt den Unterbau für die Last dar und stützt sich mit mindestens zwei ständerartigen Füßen auf dem Untergrund ab, während das andere Tragwerk aus einer Hubeinrichtung besteht, die ein kompliziertes Gebilde mit zwei im Abstand voneinander vorgesehenen Stützplatten und einem zwischengeschalteten, die Stützplatten tragenden Rahmen ist, zwischen welch letzterem und dem Unterbau für die Last eine Anzahl von Kolben-Zylinder-Einheiten vorgesehen sind. Diese Vielzahl von Hubeinheiten macht es erforderlich, daß zusätzlich ein Scharniergelenkgestell zwischengeschaltet werden muß, um die freie Beweglichkeit zwischen dem die Last tragenden Unterbau und der gesamten Hubeinrichtung zu ermöglichen. Eine solche Hubeinrichtung bedarf einer verhältnismäßig komplizierten Steuerungsanlage, um Schreitbewegungen in allen Richtungen ausführen zu können.

Die DE-B 2 216 669 betrifft ein Schreitwerk mit mehreren hydraulisch betätigbaren Schreit- und Hubbeinen. Da hierbei Zwangslagen mit unkontrollierbarem Kräftespiel auftreten können, ist die Abstützung der Schreit- und Hubbeine quer zur Schreitrichtung elastisch ausgeführt, wofür Federn und/oder hydraulische Zylinder dienen. Dies kompliziert das Hubgestell.

Bei dem als Schreitwerk ausgebildeten Bagger nach der US-PS 3 375 892 ist auf jeder Seite des Baggerkörpers eine hydraulische Hubvorrichtung vorgesehen, und zwar über seitliche Ausleger, damit der Baggerkörper mittels der seitlichen Huborgane abgestützt und angekippt werden kann. Zur Verstellung in Längsrichtung des Baggerkörpers ist auf jeder Stützplatte eine Gleitleiste angeordnet, die längs seitlicher Begrenzungsschienen verschiebbar ist. Der Stützpunkt mit der Gleitleiste steht unter der Wirkung einer in Längsrichtung der Begrenzungsschienen verlaufenden hydraulischen Verstelleinrichtung. Zur Bewegung des Baggers sind mindestens zwei senkrechte Hubelemente erforderlich. Damit eine Bewegung in Parallellage zu der Längsachse des Baggers zustande kommt, ist eine zusätzliche Einrichtung notwendig, die die schlittenartige Vorrichtung gegen Drehen sichert, was durch Seilzüge erreicht wird. Man kann nur eine Bewegung in Längsachse des Baggerkörpers erzielen. Für eine Bewegung in einer von der Längsachse abweichenden Richtung befindet sich bei dem Baggerkörper ein üblicher Drehkranz, mittels dessen in jede andere Richtung geschwenkt werden kann.

Bei dem Schreitwerk der GB-PS 1 277 307 sind ebenfalls mehrere senkrecht verstellbare Hubelemente eingesetzt, wobei an jedem Hubelement, etwa in der Mitte desselben, ein in horizontaler Ebene gelagertes verstellbares weiteres Verstellorgan angreift.

Die Verwendung einer Vielzahl von senkrechten Verstellelementen erfolgt unter dem Gesichtspunkt, daß man zur vollständigen Bewegungsmöglichkeit für die die Last tragende Plattform mehrere Hubstempel einsetzen muß, auch wenn die Plattform vordere und hintere Beine besitzt, um die wichtigsten Bewegungsarten durchführen zu können. Die Vielzahl von Hubstempeln bedingt eine komplizierte Steuerung für die Hydraulikzylinder, insbesondere für den Fall, bei dem es ermöglicht ist, die die Last tragende Plattform bzw. die Plattform zusammen mit der Last im ganzen freischwebend vom Erdboden halten und bewegen zu können. Dies ist jedoch kein besonderer Vorteil, z. B. für den Fall, daß die zu tragende Last bzw. die Gewichte ungleichmäßig auf der Plattform verteilt ist bzw. sind, z. B. wenn an der Last Ausleger od. dgl. vorhanden sind. Es bedarf einer komplizierten Steuerungs- und Regelanlage, alle hydraulischen Zylinder abgestimmt zueinander tätig werden zu lassen.

Die andere Art eines Schreitwerkes betrifft die anfangs genannte Anordnung mit nur einem Huborgan nach der DE-U 6 601 257. Bei diesem Schreitwerk weist das Untergestell eine Ausnehmung auf, innerhalb der der Hubstempel gelenkig angebracht ist, wobei das Untergestell auf seiner ganzen Länge auf dem Untergrund aufliegt. Ein einstellbarer Anschlag soll den unbelasteten Hubstempel an der Unterschreitung einer gewissen Schräglage hindern. Für verschiedene Bewegungsrichtungen muß der Anschlag um eine vertikale Achse bewegbar sein, die mit der vertikalen Achse des Kreuzgelenks an der Fußplatte zusammenfällt. Um die Bewegungsmöglichkeiten über den begrenzten Bereich zu erweitern, ist vorgesehen, mehrere Hubstempel an dem Untergestell anzubringen, wobei für die Parallelverschiebung in alle Richtungen mindestens drei Hubstempel erforderlich sind. Um dabei den Hubstempel in jede gewünschte Bewegungsrichtung neigen zu können, ist ein auf den Hubstempel wirkender Anschlag angeordnet, der auf einem Kreis bewegbar ist, dessen vertikale Mittelachse beide Anlenkachsen schneidet. Die bekannte Vorrichtung kann nur in einer beschränkten Anzahl von Richtungen bewegt werden, und zwar innerhalb eines Bogens. Um die Vorrichtung z. B. herumzudrehen, so daß sie in entgegengesetzter Richtung bewegt werden kann, muß diese auf einem Halbkreis bewegt werden. Die Bewegungsrichtung kann nur annähernd vorgewählt werden. Ferner wird zum Neigen und Ausrichten des Hubstempels einerseits ein Haltearm benötigt, der an einem Ring befestigt ist und mittels eines Ringarmes um eine lotrechte Achse drehbar ist. Andererseits ist ein Schwenkarm vorgesehen, der mittels eines Ringes und eines Ringarmes am Hubzylinder drehbar befestigt ist. Mit Hilfe eines beide Arme verbindenden Zugmittels kann der Abstand der beiden Arme verändert werden. Eine solche Verstellvorrichtung ist aufwendig und kompliziert. Sie ändert zugleich nichts daran, daß die Bewegungsmöglichkeit des Untergestells selbst begrenzt bleibt.

Aufgabe der Erfindung ist es, ein Schreitwerk der anfangs genannten Art mit einem Huborgan zu schaffen, das einfach im Aufbau, preiswert und universal zu handhaben ist. Das Schreitwerk der anfangs genannten Art zeichnet sich gemäß der Erfindung dadurch aus, daß die Plattform separate, im Abstand voneinander angebrachte vordere und hintere Stützen aufweist, und daß ein weiterer kraftbetätigter Kolbenzylinder angeordnet ist, der am unteren Ende des Huborgans angreift, um dieses im Bedarfsfall zu verschwenken.

Durch die vorstehende Ausbildung des Schreitwerkes im ganzen wird erreicht, daß mit nur einem Hubzylinder, der nur einen Teil der Last anzuheben braucht, die Last ohne Beschränkung des Bereiches, wie bei den Schreitwerken mit mehreren Hubzylindern, bewegt werden kann, ohne Beschränkungen unterworfen zu sein. Es ergibt sich weiterhin eine wesentliche Vereinfachung des ganzen Schreitwerkes nicht nur im Aufbau, sondern vor allem auch in der Steuerung des hydraulischen Huborgans. Man benötigt keine Regelanlage. Jeder Schritt der belasteten Plattform kann in einer verhältnismäßig großen Weite durchgeführt werden. Das Huborgan steht unmittelbar unter der Kontrolle des weiteren kraftbetätigten Kolbenzylinders, so daß die Bewegung der Plattform akurat kontrolliert durchgeführt werden kann.

Gemäß einem weiteren Merkmal der Erfindung können zwei Kolbenzylinder in sich kreuzenden Richtungen mit dem Huborgan gelenkig verbunden sein. Dies sichert die kontrollierte Bewegung des Huborgans außerordentlich.

Die vordere Stütze kann, wie an sich bekannt, aus zwei getrennten Füßen bestehen. Vorteilhaft weisen die vorderen getrennten Füße Gleitkufen auf, die ein Kippen der Plattform um eine Linie ermöglichen.

Die Erfindung wird anhand einer in der Zeichnung dargestellten Ausführungsform nachstehend erläutert.

Figur 1 zeigt eine Seitenansicht eines Schreitwerkes gemäß der Erfindung, im Schema.

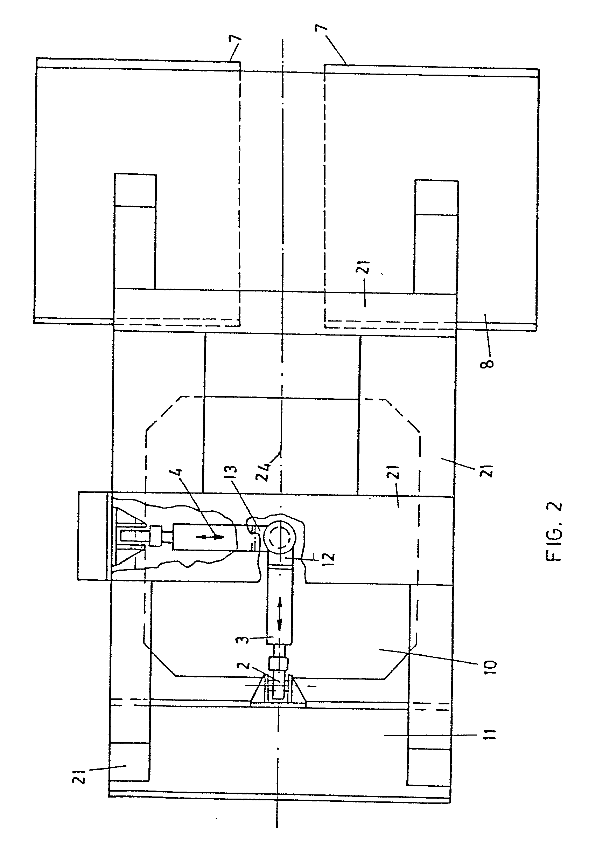

Figur 2 ist eine Draufsicht der Anordnung nach Figur 1.

Figuren 3 bis 6 zeigen schematische Ansichten zur Veranschaulichung der Funktion des Schreitwerkes, und

Figur 7 ist eine schematische Draufsicht zur Darstellung des Ausmaßes der Bewegung des Schreitwerkes.

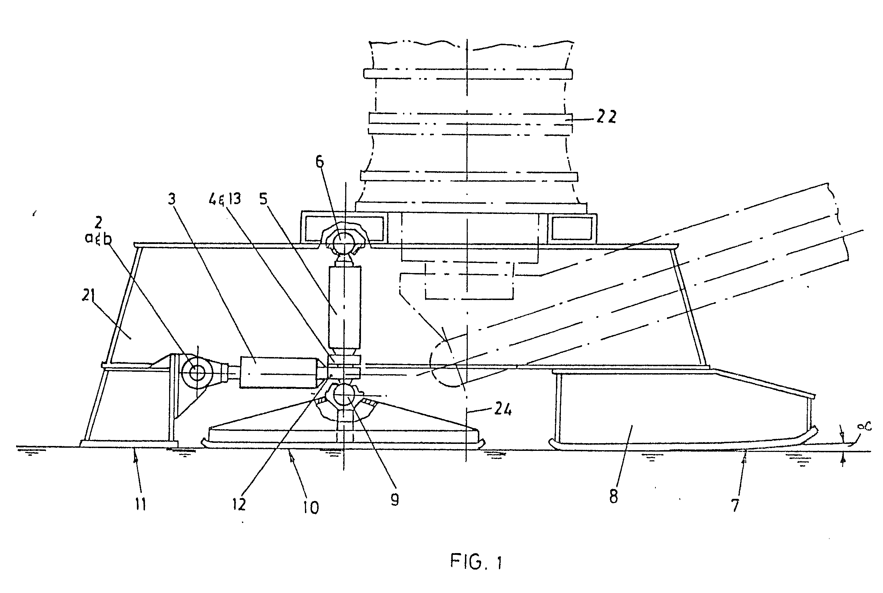

Das Schreitwerk weist ein Untergestell mit einer Plattform 21 aus Rahmenteilen auf. Die Plattform 21 ruht auf Stützen 11 und 8, wobei die Stütze 8 zwei Füße 7 mit Gleitkufen aufweist. Eine Last, z. B. ein Brecher 22, auf der Plattform 21 ist in Fig. 1 strichpunktiert dargestellt. Diese Last 22 wird näher von der Stütze 8 als von der Stütze 11 abgestützt, wobei ihr Schwerpunkt längs der Linie 24 verläuft. Die Plattform 21 und die Stützen 11 und 8 sind robust ausgebildet, um die Last 22 im Betrieb tragen zu können.

Eine doppelt wirkende Kolben-Zylinder-Einheit 5 ist mittels eines an einem Ende vorgesehenen Kugelgelenkes 6 mit einem Rahmenteil der Plattform 21 verbunden. Am anderen Ende trägt sie ebenfalls über ein Kugelgelenk 9 einen massiven Fuß 10.

Eine weitere, doppelt wirkende, hydraulische Kolben-Zylinder-Einheit 3 ist unmittelbar über dem Fuß 10 mit der Stütze 11 und dem Zylinder 5 gelenkig verbunden, während eine dritte Kolben-Zylinder-Einheit 4 auch zwischen dem unteren Ende des Zylinders 5 und einem Ansatz der Plattform 21 wirksam ist.

Der Fuß 10 kann relativ zur Plattform 21 angehoben und abgesenkt zwischen den Stützen 11 und 8 hin und her bewegt und in dem Raum zwischen den Stützen nach links und rechts geschwenkt werden. Durch Kombination der beiden letztgenannten Bewegungen kann der Fuß 10 in jede gewünschte Richtung geschwenkt werden.

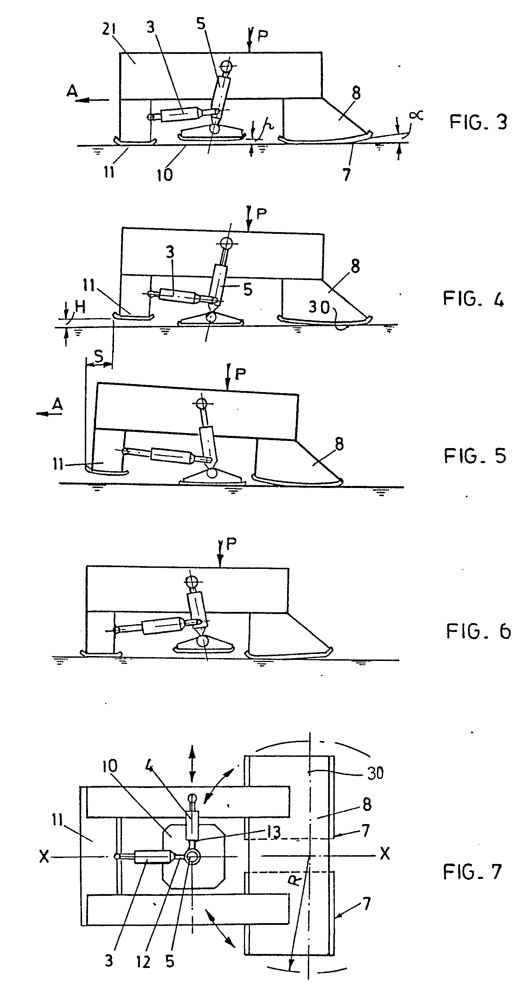

Figuren 3 bis 6 veranschaulichen die Funktion der Kolben-Zylinder-Einheiten 3 und 5 zur Fortbewegung in Richtung des Pfeiles A. Zunächst wird der Fuß 10 angehoben und nach links gezogen (Fig. 3). Dann wird die Kolben-Zylinder-Einheit 5 ausgefahren, um die Plattform um eine Linie 30 auf den Kufen 7 zu kippen (Fig. 4). Anschließend wird die Kolben-Zylinder-Einheit 3 gemäß Fig. 5 verlängert. Hierdurch wird die Stütze 8 auf der Kufe 7 nach links gezogen. Durch Wiederholung dieses Vorganges so oft wie erforderlich, kann die Last 22 in eine neue Stellung gebracht werden.

Zur Durchführung einer Richtungsänderung wird vor Ausfahren der Kolben-Zylinder-Einheit 5 zur Neigung der Plattform die Kolben-Zylinder-Einheit 4 betätigt, um den Fuß 10 zu der Mitte nach rechts oder links zu versetzen. Wird nun die Kolben-Zylinder-Einheit 3 betätigt, so rückt die Stütze 8 nicht nur nach links, sondern sie dreht sich außerdem um die Kolben-Zylinder-Einheit 5.

Es ist ersichtlich, daß mit einem Hubzylinder 5, der nur einen Teil der Last anhebt, und mit zwei Kolben-Zylinder-Einheiten 3 und 4, die auf den Hubzylinder 5 wirken, eine Last genau so wirksam bewegt werden kann, wie in der Vergangenheit mit wenigstens drei Hubzylindern und wenigstens einer anderen Kolben-Zylinder-Einheit, die auf jeden Hubzylinder wirkt. Der Fuß 10 und die Kufen 7 vermitteln immer wenigstens eine Dreipunktberührung mit dem Untergrund.

### Ansprüche

1. Schreitwerk, dessen eine Last aufnehmende Plattform (21) sich über ein Untergestell auf dem Untergrund abstützt, wobei zwischen der Plattform (21) und dem Untergrund als schwenkbare, kraftbetätigte, anhebbare und absenkbare Vorrichtung mit einem angelenkten Fuß (10) ein einziges, in Höhenrichtung verstellbares kraftbetätigtes Huborgan (5) vorgesehen ist, das zur Vertikallinie (24) des Lastschwerpunktes versetzt angeordnet ist, dadurch gekennzeichnet, daß die Plattform (21) separate, im Abstand voneinander angebrachte vordere und hintere Stützen (8, 11) aufweist, und daß ein weiterer kraftbetätigter Kolbenzylinder (3) angeordnet ist, der am unteren Ende des Huborgans (5) angreift, um dieses im Bedarfsfall zu verschwenken.

2. Schreitwerk nach Anspruch 1, dadurch gekennzeichnet, daß zwei Kolbenzylinder (3, 4) in sich kreuzenden Richtungen mit dem Huborgan (5) gelenkig verbunden sind.

3. Schreitwerk nach Anspruch 1 oder 2, dadurch gekennzeichnet, daß die vordere Stütze (8), wie an sich bekannt, aus zwei getrennten Füßen (7) besteht.

4. Schreitwerk nach einem der Ansprüche 1 bis 3, dadurch gekennzeichnet, daß die vorderen getrennten Füße (7) Gleitkufen aufweisen, die ein Kippen der Plattform (21) um eine Linie (30) ermöglichen.

### Claims

1. Walking machine comprising a load-receiving platform (21) supported via an underframe on the ground, one sole power-actuated lifting member (5) adjustable in height being provided between the platform (21) and the ground as a tiltable, power-actuated, liftable device capable of being lowered and having a pivoted foot, said lifting member being offset relative to the vertical line (24) of the centre of gravity of the load, characterized in that the platform (21) contains separate front and rear supports (8, 11) spaced from each other and that another power-actuated piston cylinder (3) is provided which engages the lower end of the lifting member (5) to swivel it if necessary.

2. Walking machine according to claim 1, characterized in that two piston cylinders (3, 4) are hingeconnected to the lifting member (5) in crossing directions.

3. Walking machine according to claims 1 or 2, characterized in that the front support (8), as known per se, consists of two separate feet (7).

4. Walking machine according to one of the preceding claims 1 to 3, characterized in that the separate front feet (7) are provided with skis to enable the platform to tilt about a line (30).

### Revendications

1. Mécanisme marchant dont la plate-forme (21) recevant une charge s'appuie sur le sous-sol par l'intermédiaire d'une base, un seul organe de levage (5) actionné par une force et déplaçable en hauteur étant alors prévu entre la plate-forme (21) et le sous-sol sous la forme d'un dispositif pivotant, actionné par une force, qui peut monter et descendre avec un pied articulé (10), et qui est décalé par rapport à la ligne verticale (24) du centre de gravité de la charge, caractérisé en ce que la plate-forme (21) présente des appuis (8, 11) séparés antérieurs et postérieurs disposés à une distance les uns des autres, et en ce qu'on dispose un autre cylindre à piston (3) actionné par une force et qui contacte l'extrémité inférieure de l'organe de levage (5) pour faire pivoter celui-ci en cas de nécessité.

2. Mécanisme marchant selon la revendication 1, caractérisé en ce que deux cylindres à piston (3, 4) sont reliés de manière articulée à l'organe de levage (5) dans des directions qui se croisent.

3. Mécanisme marchant selon la revendication 1 ou 2, caractérisé en ce que le support avant (8) est constitué, comme il est connu en soi, par deux pieds séparés (7).

4. Mécanisme marchant selon l'une des revendications 1 à 3, caractérisé en ce que les pieds antérieurs séparés (7) présentent des patins de glissement qui permettent un basculement de la plate-forme autour d'une ligne (30).

FIG. 1

FIG. 2

FIG. 3

FIG. 4

FIG. 5

FIG. 6

FIG. 7